# EUROPEAN PATENT APPLICATION

(11) **EP 3 348 748 A1**
(43) Date of publication of application: **18.07.2018**
(21) Application number: 18151742.6
(22) Date of filing: 15.01.2018
(51) Int. Cl.: E04H 4/12, G05D 9/00

(54) **LIQUID LEVEL MAINTAINER**

(30) Priority: 13.01.2017 US 201762446311 P
(71) Applicant: TTI (Macao Commercial Offshore) Limited, Macao (MO)
(72) Inventor: Pleasants Parke, Anderson, South Carolina 29626 (US); Jerabek Jesse J., Easley, South Carolina 29642 (US)
(74) Representative: Tevlin, Christopher Michael

(57) **Abstract**

A liquid level maintainer for controlling a liquid level in a reservoir includes an inlet (1) to be coupled to a source of pressurized fluid (5), an opening (16) to receive liquid from the reservoir, a first outlet (34), and a second outlet (23). A first flow path (7a) is defined between the inlet and the first outlet, and a second flow path (7b) is defined between the inlet and the second outlet. A constriction (19) is in the second flow path, configured to provide a pressure differential in the second flow path for drawing the liquid from the opening towards the constriction. A third flow path (17,18) is defined between the opening and the constriction. A valve is disposed in at least one of the first or second flow paths and configured to selectively open and close the at least one of the first or second flow paths.

## Description

The present invention relates to a liquid level maintainer for a reservoir of liquid, such as a swimming pool of water. Typically, a motorized pump is used to maintain a level of liquid.

In a first aspect of the invention, the invention provides a liquid level maintainer for controlling a liquid level in a reservoir. The liquid level maintainer comprises an inlet configured to be coupled to a source of pressurized fluid, an opening configured to receive liquid from the reservoir, a first outlet, and a second outlet. A first flow path is defined between the inlet and the first outlet, and a second flow path is defined between the inlet and the second outlet. A constriction is disposed in the second flow path, the constriction configured to provide a pressure differential in the second flow path for drawing the liquid from the opening towards the constriction. A third flow path is defined between the opening and the constriction. A valve is disposed in at least one of the first or second flow paths and configured to selectively open and close the at least one of the first or second flow paths. The valve may be considered to be a device configured to selectively open and close the at least one of the first or second flow paths.

In a second aspect of the invention, the invention provides a liquid level maintainer for controlling a liquid level in a reservoir. The liquid level maintainer comprises an inlet configured to be coupled to a source of pressurized fluid, an opening configured to receive liquid from the reservoir, a first outlet, and a second outlet. A first flow path is defined between the inlet and the first outlet, and a second flow path is defined between the inlet and the second outlet. A constriction is disposed in the second flow path, the constriction configured to provide a pressure differential in the second flow path for drawing the liquid from the opening towards the constriction. A third flow path is defined between the opening and the constriction. The liquid level maintainer also comprises a float chamber having a float configured to rise and fall in an axial direction with the liquid level in the reservoir, the float configured to selectively open and close at least one of the first or second flow paths depending on the liquid level in the reservoir. The float chamber may be considered to be a device configured to selectively open and close the at least one of the first or second flow paths.

The first and second aspects of the invention may have any of the following optional features.

The valve may be a first valve and the liquid level maintainer may further comprise a second valve disposed in the other of the first or second flow paths and configured to selectively open and close the other of the first second flow paths.

The liquid level maintainer may further comprise: a first switch configured to open and close the first valve; and a second switch configured to open and close the second valve.

The device may comprise both the valve according to the first aspect and the float chamber according to the second aspect. The first and second switches may be disposed proximate the float chamber, the float being configured to actuate the first and second switches to selectively open and close the first and second valves.

The first and second switches may be disposed on different sides of the float chamber transverse to the axial direction.

The float may comprise at least one magnet configured to rise and fall with the float for selectively opening and closing the at least one of the first or second flow paths. Optionally, the at least one magnet may be configured to cooperate with the first and second switches to open and close the first and second valves.

The float may comprise a first magnet and a second magnet configured to rise and fall with the float and configured to cooperate with the first and second switches to open and close the first and second valves, respectively. Optionally the first and second magnets may be offset in the axial direction and the first and second switches may be offset in the axial direction.

The liquid level maintainer may further comprise: a switch configured to open and close the at least one valve and disposed proximate a side wall of the float chamber, the float being configured to actuate the switch to selectively open and close the at least one valve.

The float may comprise a magnet, and the switch may be magnetically actuated by the magnet to selectively open or close the at least one valve.

The inlet may comprise a first threaded hose connector for being coupled to a garden hose, and the second outlet may comprise a second threaded hose connector for being coupled to another garden hose.

The liquid level maintainer may further comprise a magnet assembly configured to rise and fall with the float, wherein the magnet assembly is moveable in the axial direction between a first position and a second position, the first and second positions being different relative to the axial direction, wherein the magnet assembly is configured to selectively open or close the first flow path in the first position and to selectively open or close the second flow path in the second position.

In a third aspect of the invention, the invention provides a method of controlling a liquid level in a reservoir. The method comprises providing an inlet configured to be coupled to a source of pressurized fluid, providing an opening configured to receive liquid from the reservoir, providing a first outlet, providing a second outlet, providing a first flow path defined between the inlet and the first outlet, providing a second flow path defined between the inlet and the second outlet, providing a constriction disposed in the second flow path, the constriction configured to provide a pressure differential in the second flow path for drawing the liquid from the opening towards the constriction, providing a third flow path defined between the opening and the constriction, and selectively opening and closing at least one of the first or second flow paths depending on the liquid level in the reservoir.

The method may further comprise opening the first flow path when the liquid level drops to a first level, and opening the second flow path when the liquid level rises to a second level greater than the first level.

The method may further comprise: floating a magnet in a float chamber, the magnet being configured to rise and fall with the liquid level in the reservoir, and configuring a valve to open and close the at least one of the first or second flow paths based on proximity of the magnet.

Other aspects of the invention will become apparent by consideration of the detailed description and accompanying drawings.
FIG. 1 is a diagram of a liquid level maintainer according to one embodiment of the disclosure.
FIGS. 2A-2B are enlarged views of a valve in the liquid level maintainer of FIG. 1, the valve being shown in the closed and open positions, respectively.
FIG. 3A is a diagram of the liquid level maintainer of FIG. 1 operating with a high reservoir fluid level.
FIG. 3B is a diagram of the liquid level maintainer of FIG. 1 operating with a normal reservoir fluid level.
FIG. 3C is a diagram of the liquid level maintainer of FIG. 1 operating with a low reservoir fluid level.
FIG. 4 is a diagram of an alternate valve for the liquid level maintainer of FIG. 1, the alternate valve being shown in the closed position.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

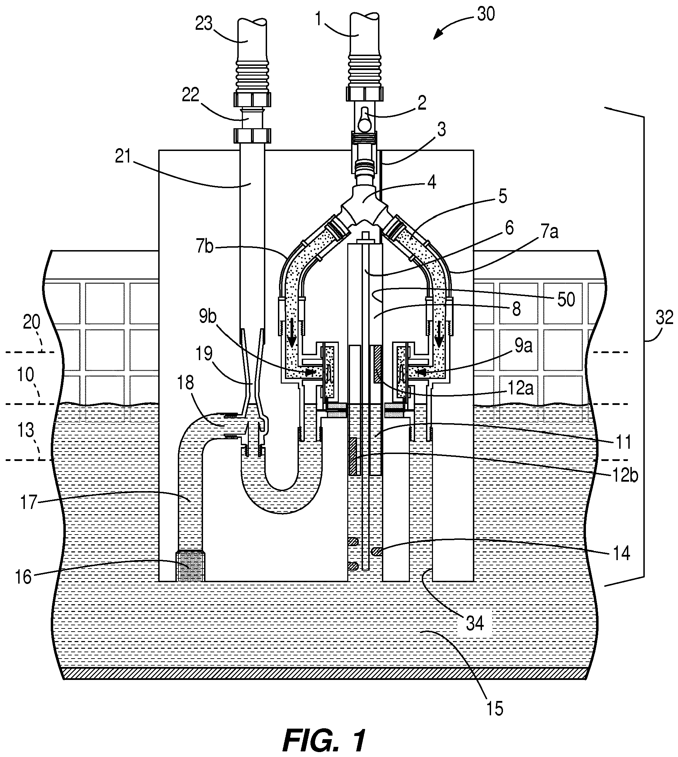

FIG. 1 illustrates a liquid level maintainer 30, which may also be referred to as a water level maintainer or a pump, for maintaining a predetermined level of liquid in a reservoir 15. For example, the reservoir 15 may include a pool, such as swimming pool, a tub, a pond, such as an artificial pond, a fountain, etc. containing water and/or other liquids.

The maintainer 30 includes an inlet 1, an outlet 23, and a plumbing assembly 32 disposed between the inlet 1 and the outlet 23. The inlet 1 may include a hose connector, such as a threaded hose connector or a quick-connect connector, and a hose coupled thereto, as shown in FIG. 1. The inlet 1 is fluidly coupled to a source of pressurized fluid 5, such as water from a utility provider, water from an elevated reservoir, water from a pump, etc. An inlet valve 2 is disposed proximate the inlet 1 for opening and closing the inlet 1 to the flow of the pressurized fluid 5.

An outlet fitting 22 is disposed proximate the outlet 23 and may include a hose connector, such as a threaded hose connector or a quick-connect connector, and a hose coupled thereto, as shown in FIG. 1.

The plumbing assembly 32 includes an inlet Y joint 4, an inlet supply tube 7a, an outlet supply tube 7b, an outlet suction tube 17, a venturi inlet port 18, a venturi valve 19, and a water outlet tube 21. The inlet Y joint 4 includes an inlet arm fluidly coupled to the inlet 1 and first and second outlet arms fluidly coupled to the inlet supply tube 7a and the outlet supply tube 7b, respectively. The inlet Y joint 4 splits the pressurized water 5 into two flow paths by way of the inlet supply tube 7a and the outlet supply tube 7b.

A first flow path, which may also be referred to herein as a filling flow path, is defined between the inlet 1 and a filling outlet 34 by the inlet supply tube 7a and selectively fluidly connects the inlet 1 to the reservoir 15 for supplying the reservoir 15 with the pressurized fluid 5. A second flow path, which may also be referred to herein as a draining flow path, is defined between the inlet 1 and the outlet 23 by the outlet supply tube 7b and selectively fluidly connects the inlet 1 and the reservoir 15 to the outlet 23 by way of the outlet suction tube 17 and the water outlet tube 21 for draining fluid from the reservoir 15 through the outlet 23, as will be described in greater detail below. The venturi inlet port 18 is fluidly coupled to the reservoir 15 by the outlet suction tube 17.

The outlet suction tube 17 includes an opening to the reservoir 15 and an outlet filter 16 disposed proximate the opening into the outlet suction tube 17 for filtering fluid from the reservoir 15 into the outlet suction tube 17.

The inlet supply tube 7a includes a filling valve 9a, such as a first magnet-actuated diaphragm valve, disposed in the first flow path for selectively opening and closing the first flow path between the inlet 1 and the reservoir 15. The outlet supply tube 7b includes a draining valve 9b, such as a second magnet-actuated diaphragm valve, disposed in the second flow path for selective opening and closing the second flow path between the inlet 1 and the outlet 23. In the illustrated embodiment, the filling valve 9a and the draining valve 9b are normally closed valves configured to open in response to magnetic activation, e.g., by the presence of a magnet. However, it should be understood that other arrangements (e.g., normally open) and the corresponding variations of the maintainer 30 needed to accommodate such alternate arrangements are within the scope of the invention.

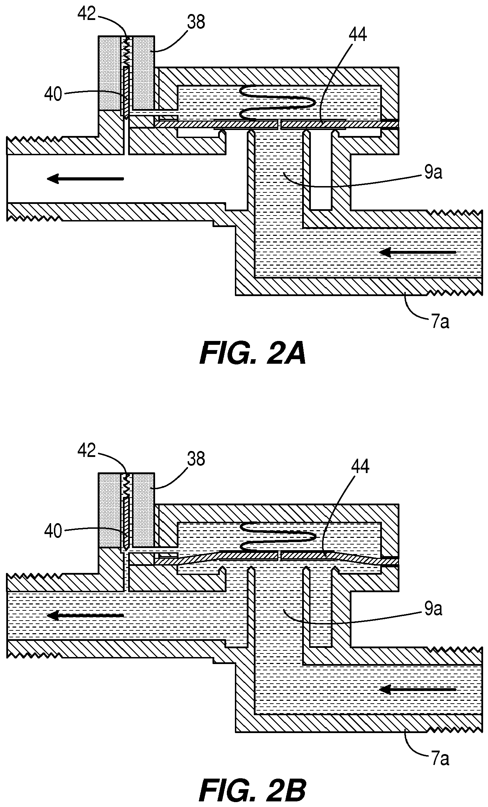

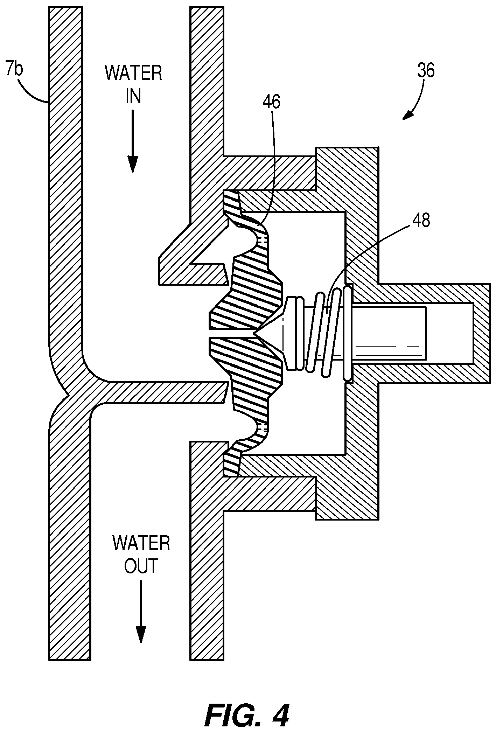

FIGS. 2A-2B illustrate one example of a filling valve 9a. Note that the draining valve 9b is merely a mirror image of the filling valve 9a. As such, the draining valve 9b can be described the same way and need not be described separately. In the illustrated embodiment, the maintainer 30 includes a switch such as a magnetic solenoid 38 having a pin 40 biased by a spring 42 to an extended, or normally closed, position (FIG. 2A). The filling valve 9a also includes a diaphragm valve 44 biased to a normally closed position. The extended position of the solenoid pin 40 corresponds with the closed position of the diaphragm valve 44. When the magnetic solenoid 38 is activated, e.g., by proximity of a magnet or magnetic field (or by a power source in other embodiments), the pin 40 moves to a retracted position against the bias of the spring 42. The retracted position of the pin 42 corresponds with an open position of the diaphragm valve 44 in which the filling flow path (or, in the case of the draining valve 9b, the draining flow path) is open. In other embodiments, other types of switches for opening and closing the filling valve 9a and draining valve 9b may be employed, such as an electric solenoid, one or more sensors detecting a liquid level in the reservoir and sending a control signal to open or close the filling valve 9a and draining valve 9b, a magnetic actuator (as will be described below with reference to FIG. 4), or any other suitable switch.

FIG. 4 illustrates another embodiment of a draining valve 36. In FIG. 4, the draining valve 36 is illustrated and could be inserted into FIG. 1 in place of the draining valve 9b. However, it should be understood that the filling valve in this alternate embodiment is a mirror image of the draining valve 36 and can be described the same way such that the filling valve need not be described separately herein. The draining valve 36 includes a normally closed diaphragm 46 for closing the draining flow path, as shown in FIG. 4. The diaphragm 46 is normally closed by a switch such as spring-biased actuator 48. The actuator 48 is magnetically-actuatable, e.g., by proximity of a magnet or magnetic field, and movable against the bias of the spring to move the diaphragm 46 to an open position for opening the draining flow path (or the filling flow path in the case of the corresponding filling valve).

Returning to FIG. 1, the maintainer 30 also includes a float chamber 8 containing a float 11 movably coupled to a float shaft 6 and arranged to rise and fall in an axial direction (e.g., parallel to the float shaft 6) with the changing fluid level in the reservoir 15. The float 11 may be inhibited from rotation about the float shaft 6, e.g., by a projection or keyed arrangement therebetween, and, as such, constrained to translation in the axial direction. A float chamber vent 3 fluidly connects the float chamber 8 to atmosphere to allow the fluid level inside the float chamber 8 to match the fluid level in the reservoir 15. The float 11 includes a first magnet 12a and a second magnet 12b coupled thereto. The float chamber 8 also includes a baffle, or baffles, 14 to inhibit debris from entering the float chamber 8.

The filling and draining valves 36 and/or the solenoids 38, are disposed proximate a sidewall 50 defining the float chamber 8 in order to provide proximity to the magnets 12a, 12b when the corresponding magnet(s) 12a, 12b reach a position adjacent to the valves 36 and/or solenoids 38 in the axial direction. The valves 36 and/or the solenoids 38 may be directly adjacent the sidewall 50. The draining valves 36 and/or the solenoids 38 are disposed on different sides of the float chamber 8 transverse to the axial direction, and in the illustrated embodiment are on generally opposite sides of the float chamber 8. In the illustrated embodiment, the solenoids 38 and/or the valves 36 are disposed at the same height in the axial direction, and the magnets 12a, 12b are offset from each other in the axial direction. However, in other embodiments, it should be understood that other arrangements can achieve the same actuation of the solenoids 38 and/or valves 36 at the same fluid level heights 10, 13, 20. For example, the solenoids 38 and/or valves 36 may be offset at different heights in the axial direction while the magnets 12a, 12b are disposed at the same height on the float 11 relative to the axial direction, in which case the magnets 12a, 12b may be separate or integrated into a single magnet. Thus, a magnet assembly may include separate magnets 12a, 12b or a single magnet. Other configurations are also possible, such as the solenoids 38 and/or valves 36 being offset and the magnets 12a, 12b being offset.

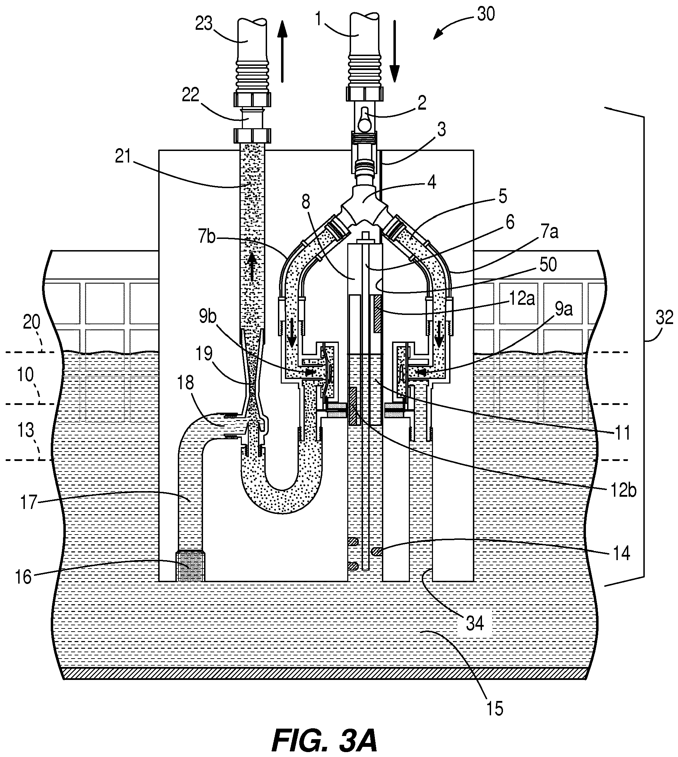

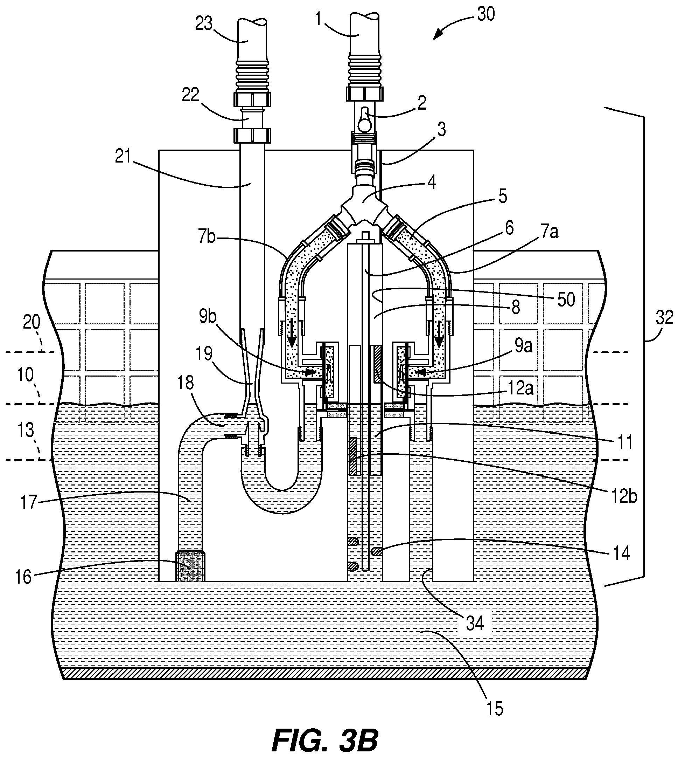

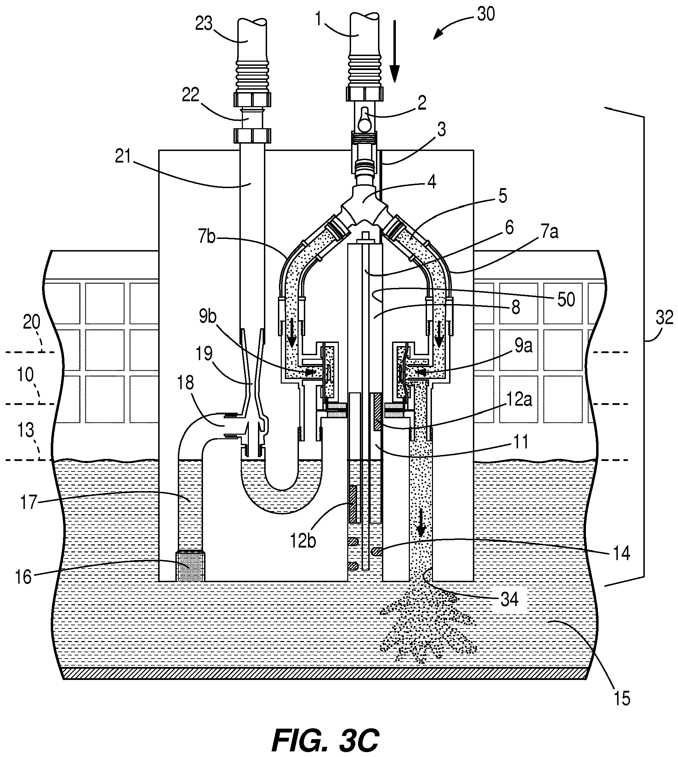

The reservoir 15 includes a predetermined normal fluid level setting 10, a predetermined low fluid level setting 13, and a predetermined high fluid level setting 20. The magnets 12a, 12b are arranged to selectively open and/or close the filling and draining valves 9a, 9b. As shown in FIG. 3C, the first magnet 12a is disposed adjacent the filling valve 9a when the fluid in the reservoir 15 reaches the low fluid level 13. As shown in FIG. 3A, the second magnet 12b is disposed adjacent the draining valve 9b when the fluid in the reservoir 15 reaches the high fluid level 20. When the fluid in the fluid reservoir 15 is between the low fluid level setting 13 and the high fluid level setting 20, e.g., at or about the normal fluid level setting 10 shown in FIG. 3B, then neither of the first or second magnets 12a, 12b is disposed adjacent the filling valve 9a or the draining valve 9b such that neither valve 9a, 9b is activated magnetically. Thus, in the illustrated embodiment, the magnets 12a, 12b are configured to selectively open the filling valve 9a and the draining valve 9b by proximity, which are normally closed. As discussed above, it should be understood that the magnets 12a, 12b can be arranged to correspond with alternate configurations of the filling and draining valves 9a, 9b (e.g., normally open) as discussed above to achieve the same effect in the functionality of the maintainer 30, which will be described in greater detail below.

In operation, the fluid level maintainer 30 is driven by a back pressure (e.g., the pressure of the fluid 5 from the fluid source) to maintain a predetermined fluid level, e.g., at or around the normal fluid level setting 10. When the reservoir 15 contains the normal fluid level 10 (FIGS. 1 and 3B), the filling valve 9a and the draining valve 9b are closed. At the normal fluid level 10, the float 11 is in a position that corresponds with the closed position of the filling valve 9a and the draining valve 9b. In the illustrated embodiment, the float 11 is in a neutral position that does not actuate the normally-closed filling or draining valves 9a, 9b.

When the fluid level drops to the predetermined low level 13 (FIG. 3C), then the reservoir 15 is in need of filling to maintain the fluid level within the predetermined range between the low level fluid setting 13 and the high level fluid setting 20. When the fluid reaches the low fluid level 13, then the float 11 opens the filling valve 9a. In the illustrated embodiment, the first magnet 12a carried on the float 11 drops to a position adjacent the filling valve 9a and actuates the solenoid 38 (or other type of switch) by proximity, which opens the filling flow path. As such, the fluid fills the reservoir 15.

When the fluid level rises to the predetermined high fluid level 20 (FIG. 3A), then the reservoir 15 is in need of draining to maintain the fluid level within the predetermined range. When the fluid reaches the high fluid level 20, then the float 11 opens the draining valve 9b. In the illustrated embodiment, the second magnet 12b carried on the float 11 rises to a position adjacent the filling valve 9b and actuates the solenoid 38 (or other type of switch) by proximity, which opens the draining flow path. Fluid in the draining flow path subsequently begins flowing to the venturi 19, which includes a constriction that creates a pressure differential, e.g., a lower pressure area relative to the surroundings, at the venturi inlet port 18. The pressure differential between the source fluid and the lower pressure area drives fluid draining such that the lower pressure at the venturi inlet port 18 draws fluid from the reservoir 15 through the outlet suction tube 17 to the water outlet tube 21, to the outlet 23. As such, the fluid drains from the reservoir 15.

It should be understood that the maintainer 30 operates in the same manner if the alternate filling/draining valve 36 is employed.

Thus, the invention provides, among other things, a fluid level maintainer 30 that is powered by the pressure of the source fluid and controlled to either fill or drain the reservoir by a switch-actuating float. Although the invention has been described in detail with reference to certain preferred embodiments, variations and modifications exist within the scope and spirit of one or more independent aspects of the invention as described. Various features and advantages of the invention are set forth in the following claims.

## Claims

1. A liquid level maintainer for controlling a liquid level in a reservoir, the liquid level maintainer comprising:
an inlet configured to be coupled to a source of pressurized fluid;
an opening configured to receive liquid from the reservoir;
a first outlet;
a second outlet;
a first flow path defined between the inlet and the first outlet;
a second flow path defined between the inlet and the second outlet;
a constriction disposed in the second flow path, the constriction configured to provide a pressure differential in the second flow path for drawing the liquid from the opening towards the constriction;
a third flow path defined between the opening and the constriction; and
a device configured to selectively open and close the at least one of the first or second flow paths, wherein the device comprises one of:
a valve disposed in at least one of the first or second flow paths and configured to selectively open and close the at least one of the first or second flow paths, or
a float chamber having a float configured to rise and fall in an axial direction with the liquid level in the reservoir, the float configured to selectively open and close at least one of the first or second flow paths depending on the liquid level in the reservoir.

2. The liquid level maintainer of claim 1, wherein the valve is a first valve, the liquid level maintainer further comprising a second valve disposed in the other of the first or second flow paths and configured to selectively open and close the other of the first second flow paths.

3. The liquid level maintainer of claim 1 or 2, further comprising:
a first switch configured to open and close the first valve; and
a second switch configured to open and close the second valve.

4. The liquid level maintainer of claim 3, wherein the device comprises both the valve and the float chamber, and wherein the first and second switches are disposed proximate the float chamber, the float being configured to actuate the first and second switches to selectively open and close the first and second valves.

5. The liquid level maintainer of claim 4, wherein the first and second switches are disposed on different sides of the float chamber transverse to the axial direction.

6. The liquid level maintainer of claims 4 or 5, wherein the float comprises at least one magnet configured to rise and fall with the float for selectively opening and closing the at least one of the first or second flow paths, and optionally configured to cooperate with the first and second switches to open and close the first and second valves.

7. The liquid level maintainer of claims 4 or 5, wherein the float comprises a first magnet and a second magnet configured to rise and fall with the float and configured to cooperate with the first and second switches to open and close the first and second valves, respectively, and optionally , wherein the first and second magnets are offset in the axial direction and the first and second switches are offset in the axial direction.

8. The liquid level maintainer of claim 1, further comprising:
a switch configured to open and close the at least one valve and disposed proximate a side wall of the float chamber, the float being configured to actuate the switch to selectively open and close the at least one valve.

9. The liquid level maintainer of claim 8, wherein the float comprises a magnet, and wherein the switch is magnetically actuated by the magnet to selectively open or close the at least one valve.

10. The liquid level maintainer of any preceding claim, wherein the inlet comprises a first threaded hose connector for being coupled to a garden hose, and wherein the second outlet comprises a second threaded hose connector for being coupled to another garden hose.

11. The liquid level maintainer of any preceding claim, further comprising a magnet assembly configured to rise and fall with the float, wherein the magnet assembly is moveable in the axial direction between a first position and a second position, the first and second positions being different relative to the axial direction, wherein the magnet assembly is configured to selectively open or close the first flow path in the first position and to selectively open or close the second flow path in the second position.

12. A method of controlling a liquid level in a reservoir, the method comprising:
providing an inlet configured to be coupled to a source of pressurized fluid;
providing an opening configured to receive liquid from the reservoir;
providing a first outlet;
providing a second outlet;
providing a first flow path defined between the inlet and the first outlet;
providing a second flow path defined between the inlet and the second outlet;
providing a constriction disposed in the second flow path, the constriction configured to provide a pressure differential in the second flow path for drawing the liquid from the opening towards the constriction;
providing a third flow path defined between the opening and the constriction; and
selectively opening and closing at least one of the first or second flow paths depending on the liquid level in the reservoir.

13. The method of claim 12, further comprising
opening the first flow path when the liquid level drops to a first level, and opening the second flow path when the liquid level rises to a second level greater than the first level.

14. The method of claim 12, further comprising:
floating a magnet in a float chamber, the magnet being configured to rise and fall with the liquid level in the reservoir, and configuring a valve to open and close the at least one of the first or second flow paths based on proximity of the magnet.
